# EUROPEAN PATENT SPECIFICATION

(11) **EP 3 338 523 B1**
(45) Date of publication and mention of the grant of the patent: **10.07.2019**
(21) Application number: 17201128.0
(22) Date of filing: 10.11.2017
(51) Int. Cl.: A01C 7/08, A01C 7/16, A01C 15/00, A01B 73/04

(54) **SOWING MACHINE AND METHOD FOR SOWING**
SÄMASCHINE UND VERFAHREN ZUM SÄEN
SEMOIR ET PROCÉDÉ POUR SEMER

(30) Priority: 23.12.2016 FI 20166032
(43) Date of publication of application: 27.06.2018
(73) Proprietor: Junkkari OY, 62375 Ylihärmä (FI)
(72) Inventor: Kukkola, Tarmo, 62375 Ylihärmä (FI)
(74) Representative: Kolster Oy Ab

(56) References cited:
- EP-A2- 1 212 933
- FR-A5- 2 103 063
- US-A- 2 746 621

## Description

### Background of the invention

The present invention relates to a sowing machine in accordance with the preamble of claim 1.

The invention also relates to a method in accordance with the preamble of claim 14 for carrying out sowing with such a sowing machine.

Sowing or sowing and fertilizing have long been performed mechanically by so-called seeding apparatuses or seeder-fertilizer machines. An example of a sowing machine can be found in FR 2 103 063 A. As production requirements keep on rising, the machines have been made wider and wider to cut work costs. Keeping up a seed and fertilizer flow of such wide machines has required complicated structures. To establish a reliable seed and fertilizer flow, the most common solution has been to control the flow pneumatically. However, a pneumatic sowing machine usually requires a continuous work machine such as a tractor by means of which a constant rotation speed may be sustained regardless of the driving speed. The constant rotation speed of the work machine is thus a requirement so that a steady blow and hence a uniform sowing result may be maintained on these sowing machines. These work machines, however, are very expensive whereby the cost savings aimed at melt away in machine investments and expensive service costs of these machines.

### Brief description of the invention

It is therefore an object of the invention to develop a sowing machine and a method for using it so that the above-mentioned problems are at least mainly solved. The object of the invention is achieved by a machine which is characterized by what is disclosed in independent claim 1 and by a method which is characterized by what is disclosed in independent claim 14. Preferred embodiments of the invention are disclosed in the dependent claims related to these.

To achieve more economical machine investments, the basic idea of the invention is to develop a mechanically working sowing machine that is able to compete with pneumatically-operating machines and devices insofar as their prices are concerned. For this purpose, the device makes use of mechanical solutions for transferring seeds and fertilizer from both the intermediate container to compartments used in sowing and within these compartment themselves.

The terms "up", "down", "above", "below", and so forth used in the specification illustrate the features of the invention in the directions that are relative to inventive sowing machine as presented in the attached figures.

The invention provides considerable advantages. So, with the inventive sowing machine it is in particular possible to replace pneumatic-operated sowing machines that are far more expensive and structurally complicated with their complex tubing that are difficult to service. The simpler invention, largely based on conventional mechanical structural solutions, is not only easier to service but also exhibits a better efficiency. A pneumatic-operated sowing machine requires a large amount of power to produce an adequate pressure. However, large amounts of air create a cloud of dust rising from the ground being sowed, which will descend on the machine impairing its performance.

The sowing machine according to the invention also helps achieve a more uniform sowing outcome on the entire working width, because a more precise exact number of seeds will be output from each coulter than in a pneumatic-operated sowing machine. Sowing machines equipped with pneumatic distributors have the natural tendency to distribute seeds unevenly depending to some extent on the seed material and straightness of the field. The feed apparatus in a mechanical sowing device according to the invention additionally maintains its accuracy also when the seed and fertilizer containers are about to become empty. In feeding that operates pneumatically, air will leak into the seed and fertilizer boxes unless they are pressurised, whereby the feed quantities decreases as the containers become empty.

A further problem with a pneumatic sowing machine is the humidity passing to the sowing and fertilizer units with the pressurized air, which condenses in the device. Humidity gets the seeds and fertilizer lumpy, which further contributes to an impaired sowing outcome. Similar problems result from static electricity that the pressurized air creates in the sowing machine.

In a pneumatic-operated sowing device, the clogging of seed tubes in the feed apparatus of the sowing unit is a problem. Attempts have been made to monitor and prevent this by developing guards of different types. In the solution according to the invention, the clogging of seed tubes is not possible because the seed tubes descend almost orthogonally down.

The clogging problem of seed tubes of sowing units in pneumatic-operated sowing devices is made worse by the fact that it uses one feed device that dispenses the seed material to the seed tubes leading to all the coulters. The sowing machine according to the invention has a dedicated feed means for each coulter. At the same time, the inventive solution will have a better feed accuracy than the rival pneumatic-operated sowing device.

It may further be noted that in the inventive solution provided with a conveyor, the seed (or grain of fertilizer) reaches its feed device with a higher certainty than in a solution where the seed proceeds by way of gravity. This is most evident in situations in which sowing takes place in an inclined slope. In such a case, the reaching of the feed device by gravity is actually impossible.

Other advantages provided by the invention are disclosed in the following more detailed description of specific embodiments of the invention.

### Brief description of the figures

In the following, a preferred embodiment of the invention is explained in more detail with reference to the accompanying drawing, in which
Figure 1 is an axonometric rear view of a first embodiment of a sowing machine in a sowing position obliquely from above,
Figure 2 shows the sowing machine of Figure 1 directly from the rear,
Figure 3 is an axonometric rear view of a the sowing machine of Figure 1 in a transport position obliquely from above,
Figure 4 shows the sowing machine of Figure 3 directly from the rear,
Figure 5 is an axonometric view of a seed or fertilizer compartment of a sowing machine according to the invention obliquely from above,
Figure 6 shows a cross-sectional schematic view of a seed or fertilizer compartment at point A-A of Figure 5,
Figure 7 is an axonometric rear view of a second embodiment of a sowing machine in a sowing position obliquely from above,
Figure 8 shows the sowing machine of Figure 7 directly from the rear,
Figure 9 is an axonometric rear view of a the sowing machine of Figure 7 in a transport position obliquely from above,
Figure 10 is an axonometric view of an embodiment of a seed and fertilizer compartment of a sowing machine according to Figure 7 obliquely from above,
Figure 11 shows a cross-sectional schematic view of a seed and fertilizer compartment at point B-B of Figure 10,
Figure 12 shows a schematic longitudinal cross section of a seed and fertilizer container of a sowing machine,
Figure 13 is a schematic representation of the operation of the mechanical power transmission used in the sowing machine, and
Figure 14 shows a sowing machine cornering.

### Detailed description of preferred embodiments

The present figures do not show the sowing machine in scale but the figures are schematic, illustrating the structure and operation of the preferred embodiments in principle. The structural parts shown by reference numbers in the attached figures then correspond to the structural parts marked by reference numbers in this specification.

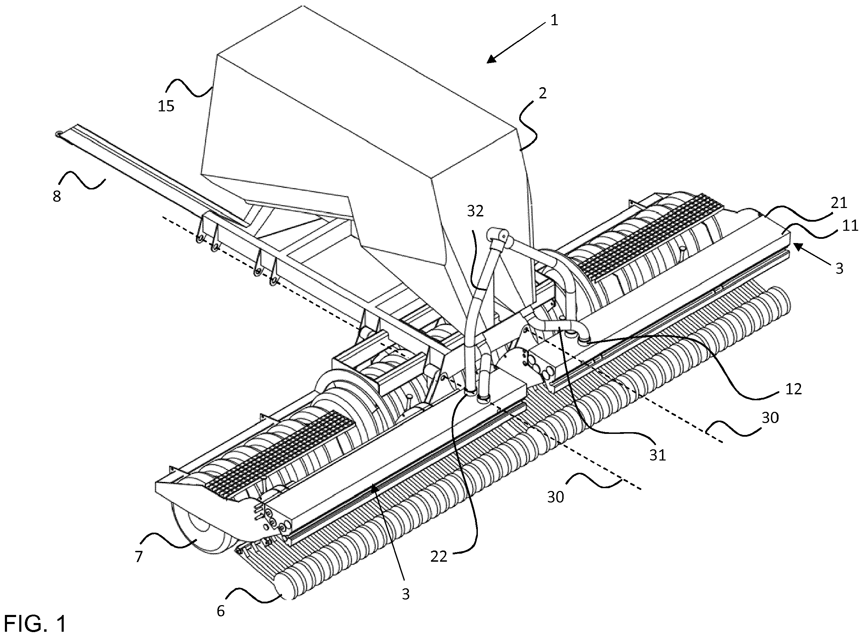

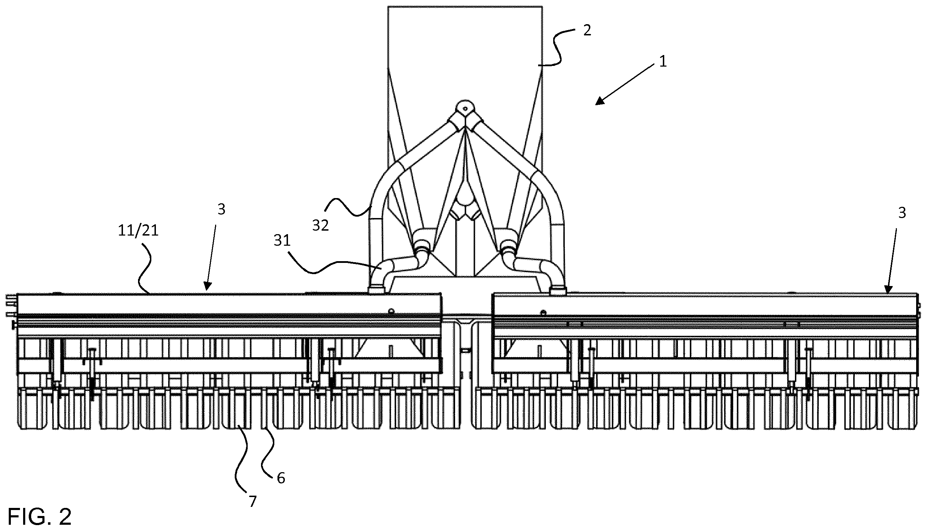

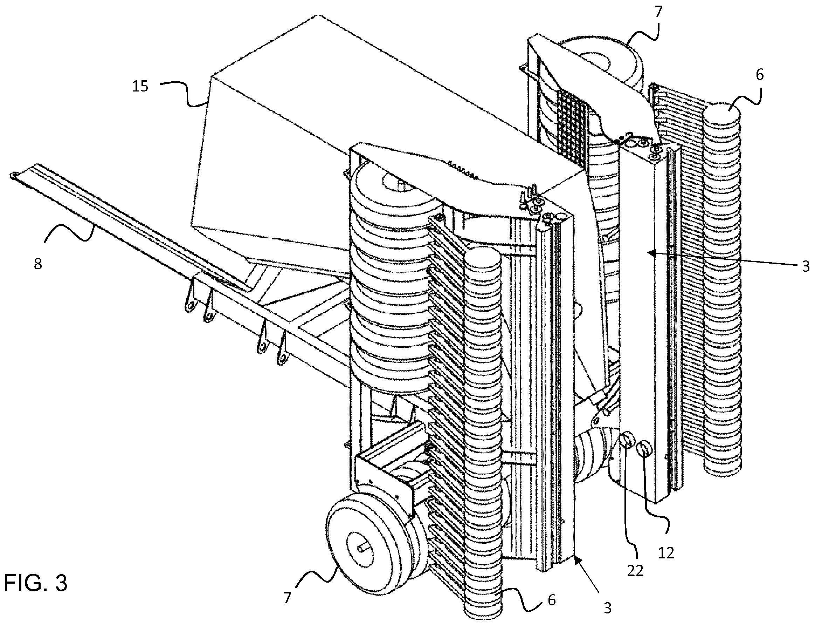

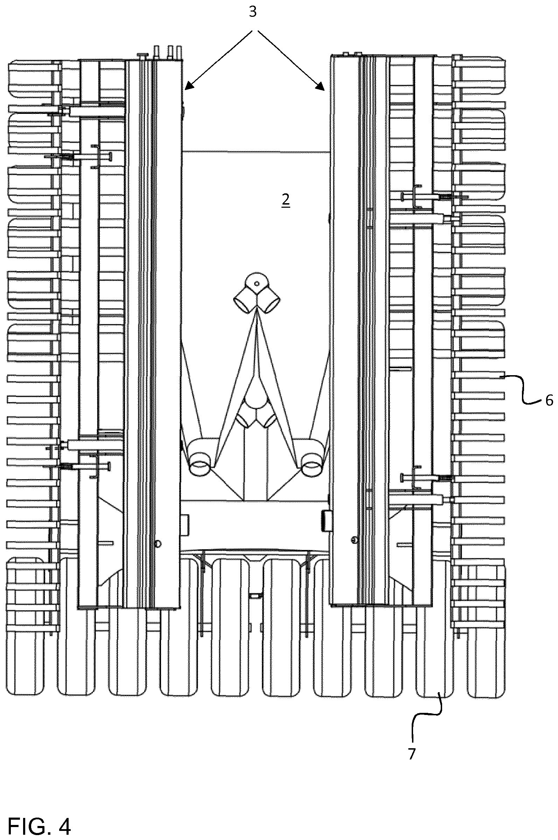

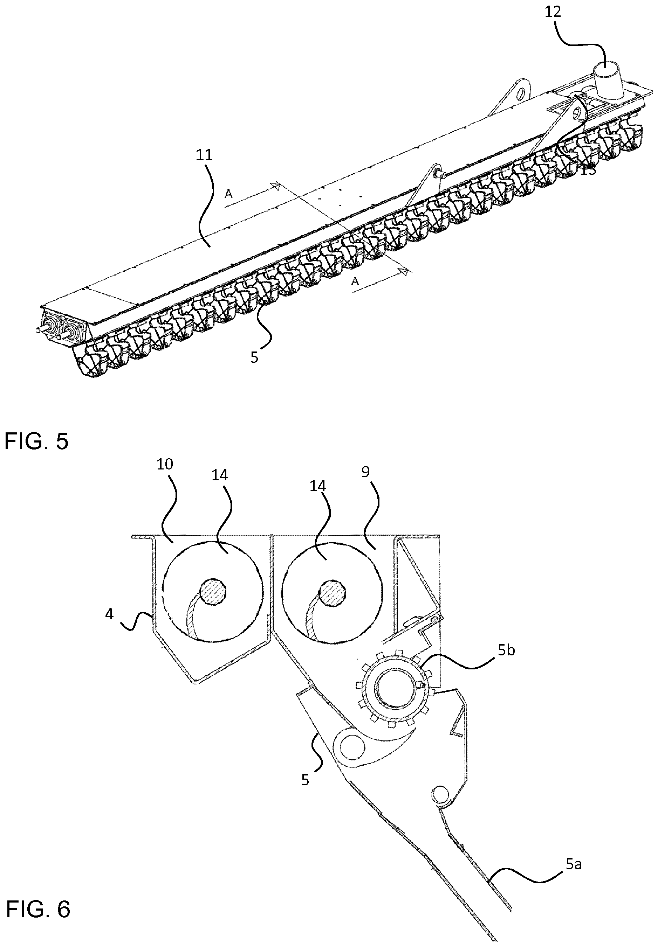

Figures 1 to 6 show a first embodiment of a sowing machine 1, thus comprising at least a seed container 2 to store the seeds to be sowed. From this seed container, the seeds are guided through a seed unit 3 to the ground. This seed unit comprises a seed box 4, longitudinal and enclosed-type as to its structure as shown in Figures 5 and 6, from which the seeds are directed, by means of a feed apparatus 5 connected thereto, through seed tubes to a seed coulter 6, whereby to each coulter a seed tube 5a known per se descends, to which a dedicated gear-like feed means 5b of the feed apparatus guides the seeds. The coulter specific mechanical feed device ensures a most uniform sowing outcome on the entire working width of the machine. Such a feed apparatus is shown in a very schematic and simplified manner in the attached drawings, and there is no need to examine the structures or operation of the equipment therein in any closer detail.

The sowing machine 1 according to the embodiment being discussed further has press wheels 7 known per se to condense and finalize the sowing.

The sowing machine 1 is transferred with a work machine to which it is connected in a conventional way by means of a pulling device 8 shown schematically.

The seed box 4 of the feed unit 3 of the first embodiment of the sowing machine being examined comprises two seed compartments as shown in Figures 5 and 6, which is out of the ordinary. In the following, these parallel compartments of the seed box in the direction of its longitudinal axis are referred to as sowing compartment 9 and return compartment 10. The seeds to be sowed, directed to the seed box, are primarily led through at least one filling opening 12 in the lid 11 of the seed box to the return compartment, cf. Figure 1, for example. The parallel sowing compartment and return compartment are arranged to be connected to each other at least at two places along their longitudinal axis. However, the connection is advantageously formed by means of transfer openings 13 at the opposite ends of the pair of elongated compartments. As shown in Figure 6, there are connections from the sowing compartment to the seed feed apparatus 5 or similar means guiding the seeds for sowing.

In each of the sowing compartment 9 and return compartment 10, transfer means 14 in their longitudinal direction and advantageously establishing a mechanical movement, have been arranged, cf. cross-section in Figure 6. This way, the seeds fed to the return compartment are guided, transferred by the transfer means, to the first feed means in the sowing compartment through the transfer opening 13. The transfer means are in such a case advantageously equipped with a throw plate by means of which the transfer of the seeds from one compartment to the next may be enhanced.

The first transfer means are thus in the first filling tray 12, and are adapted to carry the seeds that are transferring to the sowing compartment 9 to the feed apparatuses 5 in connection with the sowing compartment. The gear-like feed means 5b of these feed apparatuses, or similar means, in turn guide at least part of the seeds carried to them further to be sowed.

Second transfer means 14, having an opposite direction of movement, are arranged in the return compartment 10 of the seed box 4. The seeds that have not found their way to be sowed, guided by the feed apparatus 5, will sooner or later be carried by the first transfer means to the end of the sowing compartment 9 from where they advantageously move, assisted by the throw plate, to the return compartment through the transfer opening 13. The second transfer means are in such a case adapted to return these seeds that have bypassed the feed apparatus to the beginning of the sowing compartment through the transfer opening. The circulation of the seeds will be continued for as long as there are seeds in the seed box, or when there is no area left to be sowed.

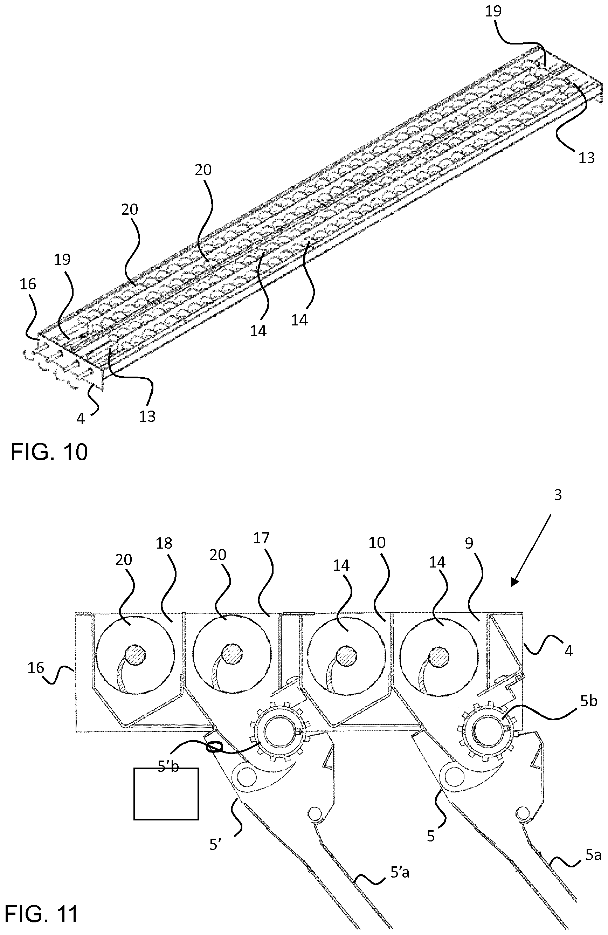

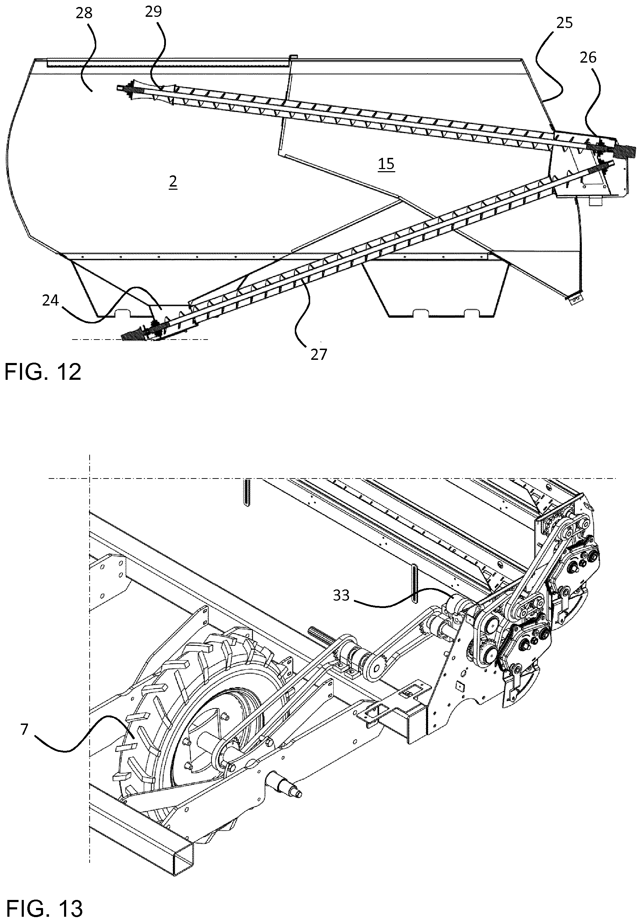

If the sowing machine 1 is also used to fertilize the sowing, the sowing machine comprises, in addition to the seed container 2, a fertilizer container 15 for storing the fertilizer released in connection with the seeds being sowed. A container of this kind is shown in Figure 12. From this container the fertilizer, most often of a granular structure, is transferred to a fertilizer box 16. In the embodiment of Figures 10 and 11, this fertilizer box is adapted in the sowing unit 3 in parallel with the seed box 4. From the fertilizer box the fertilizer granules are led in a conventional way by means of a feed apparatus 5' connected thereto to the seed coulter 6 shared with the seed feed apparatus 5.

In said fertilizer box 16, too, two parallel compartments in the direction of its longitudinal axis have been formed, which in the following will be referred to as a fertilizer compartment 17 and transfer compartment 18. As was the case with the seed box, also the fertilizer compartment and transfer compartment are arranged to be connected to each other at least at two places along their longitudinal axis. The connection is advantageously formed by means of flow openings 19 at the opposite ends of the pair of elongated compartments.

In each of the fertilizer compartment 17 and transfer compartment 18, there are transfer means 20 in their longitudinal direction and advantageously establishing a mechanical movement, cf. cross-section in Figure 11. Of these, the first transfer means are adapted to guide the fertilizer granules in the fertilizer compartment to the feed apparatus, and the second transfer means are arranged to return the fertilizer granules that bypassed the feed apparatus and are flowing to the transfer compartment through the flow opening, to the beginning of the fertilizer compartment. The transfer means are also in this embodiment advantageously provided with a throw plate at the transfer opening, by which the transfer of seeds from one compartment to the next may be enhanced.

In the present embodiment, this is so implemented that the fertilizer granules are first guided to the fertilizer box 16, in Figure 10 the outer transfer compartment. The fertilizer granules are primarily directed to said transfer compartment 18 through the filling tray 22 in the lid 21 of the fertilizer box, cf. Figure 1, for example. Said lid 21 may, of course, be shared with the seed box. The first transfer means in the transfer compartment are adapted to carry the fertilizer granules to the transfer compartment end on the side of the fertilizer container 15, from where they move to the fertilizer compartment 17 through the flow opening 19. In the fertilizer compartment, the second transfer means 20 having an opposite direction of movement are arranged to transfer the fertilizer granules received through the flow opening further to the feed apparatus 5' in connection with the fertilizer compartment. The gear-like feed means 5'b of this feed apparatus, or similar means, in turn guide at least part of the seeds transferred to them through a fertilizer tube 5'a to be placed in connection with the sowing.

The fertilizer granules that have not found their way to be sowed, guided by the feed apparatus, will sooner or later be carried by the second transfer means to the end of the fertilizer compartment 17 from where they move back to the transfer compartment 18 through the flow opening 19. The circulation of the fertilizer granules will be continued for as long as there are fertilizer granules in the fertilizer box, or when there is no area left to be sowed.

When using a fertilizer compartment 17 in a sowing machine as described in the above, it may be placed in connection with the seed compartment as shown in Figures 1 to 6. In such an embodiment, it is advantageous to connect the seed tube 5a to the feed apparatus of the fertilizer, whereby the fertilizer and seeds may be guided to the coulter by utilizing one common tube.

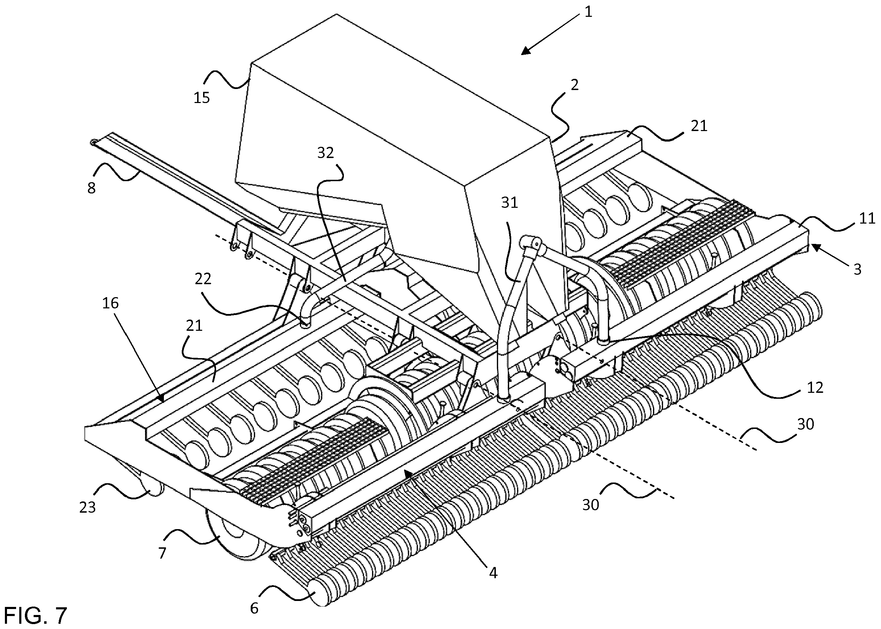

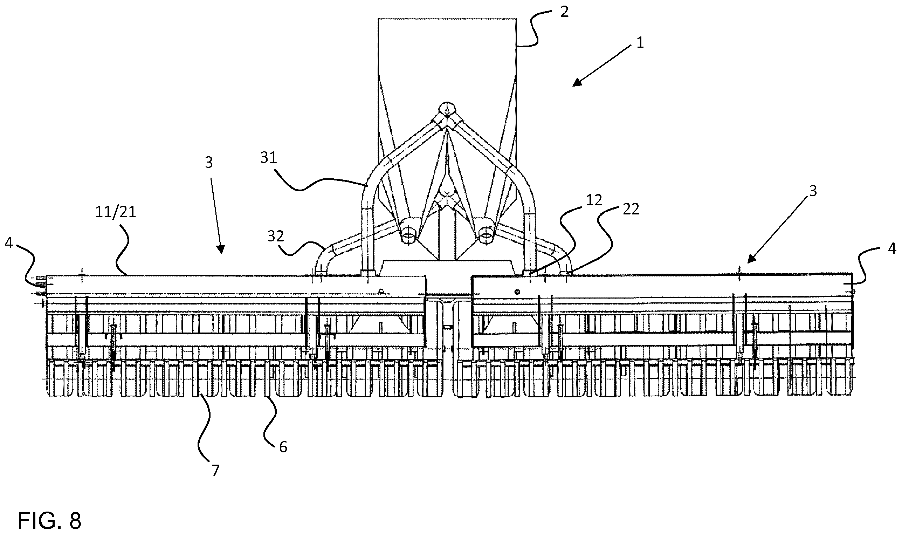

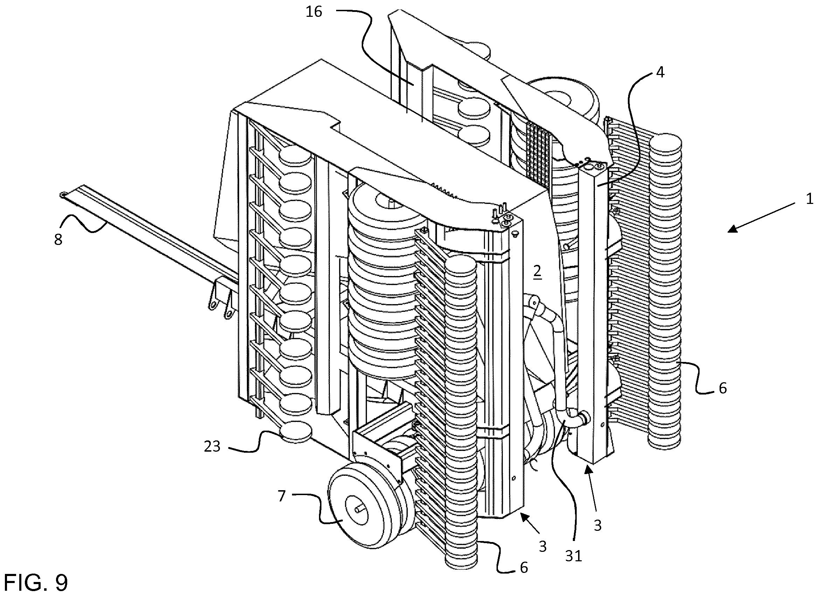

On the other hand, the fertilizer compartment may be installed to be separate from the seed compartment as shown in Figures 7 to 9. In this case, there will also be a separate set of fertilizer coulters 23 on the sowing machine, to which the feed apparatus guides the fertilizer seeds and from which they are further directed to a seed furrow.

The continuous circulation of the seed and/or fertilizer boxes 4 and 16 may be implemented with the transfer means 14 and 20, which is primarily a screw conveyor. As transfer means, it is obviously possible to use other means creating a mechanical transfer movement, such as flap conveyors, push rods, vibration created in the structure, or conveyor mats, for example.

As mentioned in the above, the seeds are directed to the seed box 4 through the filling tray 12 adapted to its lid 11. Similar technology is also used to fill the fertilizer box 16, whereby the fertilizer granules are guided to the fertilizer box through a tray 22 adapted to its lid 21. The seeds may in such a case be guided to the tray in the seed box by letting them rum by way of gravity from the seed container 2, or by making use of a threaded screw, for example. Likewise, the fertilizer granules may be directed to the tray in the fertilizer box by letting them rum by way of gravity from the fertilizer container 15, or by a second threaded screw, for example.

The embodiment according to Figure 12 shows a container that has a front container forming the seed container 2, and a rear container forming the fertilizer container 15. Although the parts of the container are here referred to as a seed and fertilizer container for reasons of simplicity, it is quite possible to put the seeds in the rear container and the fertilizer in the front container. Other granular material intended for spreading may also be placed in the containers.

The material is arranged to be led from the bottom 24 of the front container 2 to a distribution container 26 created in the rear wall 25 of the rear container 15, by a first conveyor screw 27. From the distribution container, the material may then be directed by way of gravity further to the sowing unit 3. By adapting a second conveyor screw 29 between the distribution container and the top part 28 of the front container, the distribution container may be emptied of surplus material it gathers. By closing a valve leading to the sowing unit, these conveyor screws and distribution container may also be utilized to mix the material in the front container. The continuous circulation of material by the conveyor screws will before long mix the entire material directed to the front container. Therefore, this part of the container may be utilized to mix different kinds of materials sowed together before sowing is commenced. To prevent sorting of material in the front container, it is also possible to maintain such mixing for the entire duration of the sowing process.

By installing at least two sowing units 3 to the sowing machine 1, a mechanically working sowing machine is established, the working width of which is notably wider than the seed and/or fertilizer container, due to which the efficiency of the sowing machine may be considerably increased. By making use of the reliably working sowing units described herein, they may be adapted to be rotatable between transport and use positions in relation to the direction of movement of the sowing machine. The sowing unit 3 may thus be rotated in relation to the articulated shaft 30 on its inner end to a substantially vertical position in a plane that is substantially transverse in relation to said direction of movement. A sowing machine arranged in a transport position like this helps achieve a high work efficiency and allows it to be easily and fast transferred by road to the next work site.

By placing the filling trays 12 and 22 of the seed and fertilizer boxes 4 and 16 outside of the hinge line of the articulated shaft 30, it may be ensured that the tubes 31 and 32 guiding material from the seed container 2 and correspondingly from the fertilizer container 15 will loosen when lifted from the sowing unit 3. At the same time, it may be made sure that these tubes straighten out into a curved form in the work position of the sowing units. This guarantees that there will be no pockets left in the tubes in their work position, which would hinder the transfer of material from the containers to the sowing units.

Figures 1 to 4 show the first embodiment of the sowing machine, in which there are two sowing units 3 equipped with parallel seed and fertilizer boxes 4 and 16 in the sowing machine. In such a case, the sowing units in their use position are positioned on substantially the same longitudinal axis while in their transport position they are in turn substantially parallel.

When the sowing machine 1 uses a plurality of sowing units, it is also advantageous to divide the press wheels 7 of the sowing machine into a plurality of groups. In the present first embodiment of the sowing machine, the press wheels comprise wheels divided into three groups. In this case, two groups of press wheels at the outer section of the sowing unit 3 are adapted to follow the sowing unit as it is moved to the transport position. The middle group of press wheels in the sowing machine in this case forms the running wheels of the sowing machine during its transport.

Figures 7 to 10 show a second embodiment of the sowing machine, in turn comprising sowing units 3 provided with seed and fertilizer boxes 4 and 16 that are separate from each other. In this embodiment, too, the sowing boxes on the one hand and the fertilizer boxes on the other are in their use position positioned on substantially the same longitudinal axes while in their transport position they are in turn substantially parallel.

In the second embodiment of the sowing machine 1, the press wheels 7 of the sowing machine are also advantageously divided into three groups. In this case, two groups of press wheels at the outer section of the sowing unit 3 are adapted in a shared swivelling frame with the seed and fertilizer boxed 4 and 16, the press wheels following the sowing unit as it is moved to the transport position. The middle group of press wheels in the sowing machine in this case, too, forms the running wheels of the sowing machine during its transport.

Differing from the prior art structurally complicated pneumatic operated sowing machines, the operation of the sowing unit of the present sowing machine 1 is advantageously controlled with a considerably simpler mechanical power transmission. A power transmission of this kind is shown in Figure 13. The required power for the operation of the sowing unit 3 is accordingly derived from the axle of the press wheels 7 of the sowing machine separately for the right and left sides of the sowing machine. The rotating movement of the press wheels is transmitted by a chain or belt transmission to both the transfer means 14 and 20 and the feed apparatuses 5 and 5'. By adapting a freewheel clutch in the chain transmission, the transfer means are available for use controlled by a hydraulic motor 33, for example, even if the sowing machine were not driven. The sowing machine may, of course, be also implemented so that the sowing unit is controlled with a hydraulic or electric motor, only, whereby such a freewheel clutch is naturally unnecessary. In such an embodiment, the transfer means would be usable both during driving and when stationary.

Such a mechanical power transmission is obviously replaceable by a hydraulic motor or electric motor driving the transfer means 14 and 20 and/or feed apparatuses 5 and 5'.

Due to its power transmission, the sowing machine being discussed is a system independent of the driving speed, and maintaining the position accuracy of the seeds and fertilizer. Because the operation of the feed means of the sowing machine is constantly associated with the driving speed of the machine, uphill or other elements of delay do not produce inaccuracy in the outcome.

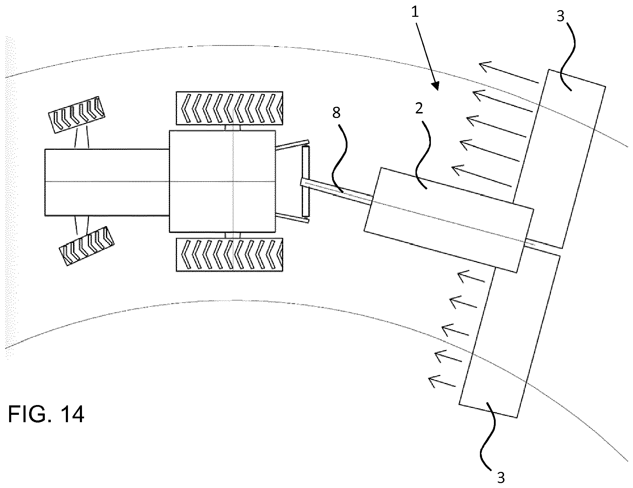

When the sowing machine 1 uses two parallel sowing units 3, for example, the separate drive derived from opposite ends of the press wheels 7 adds to the sowing accuracy for both sides during cornering. This is achieved by structurally separating the opposite press wheels from each other, by grouping the press wheels on two or more axles. The operation is shown in Figure 14. So, the rotational movement of the press wheels taking the inner curve is slower than the rotational movement of the press wheels taking the outer curve. Since the speed of the rotational movement is conveyed by chain control to the feed apparatuses 5 and 5', the feed apparatuses of the inner curve will be adjusted for a slower sowing speed, and the feed apparatuses of the outer curve for a faster sowing speed. Said mechanical chain-controlled speed adjustment may, of course, be replaced with sensors monitoring the rotation speed of the press wheels at each place, which in turn control the operation speed of the feed apparatus at the corresponding location.

The present sowing machine operates in the following manner.

Fertilizer, seeds, or other granular substance is loaded to the desired section 2 and/or 15 of the container. As the sowing machine starts, the first conveyor screw 27 begins to move the material to the distribution container 26. When the bottom valve in the distribution container is closed, or the distribution container is otherwise full, the material returns, guided by the second conveyor screw 29, to the front container. If it is desired to premix the material in the front container, the bottom valve of the distribution container is kept closed and the conveyor screws are kept on, moving material repeatedly between the front and distribution containers. This way the material in the front container may be homogenized, if so desired.

When sowing is begun, the bottom valves in the distribution container and rear container are opened, after which the material in the containers flows by way of gravity through tubes 31 and 32 to the longitudinal and substantially enclosed seed box 4 through the filling tray 12 arranged on the lid 11 thereof and to the fertilizer box 16 through the tray 22 arranged in the lid 21 thereof.

In the seed and/or fertilizer boxes 4 and 16 the material directed to them circulates circumferentially along parallel channels, guided by the transfer means, such transfer means primarily being a screw conveyor. As the material is circulating in the seed and/or fertilizer boxes, it meets the one or more feed apparatuses 5 connected thereto, by means of the seed tube connected thereto, the material is finally guided to the coulter 6.

A person skilled in the art will find it obvious that, as technology advances, the basic idea of the invention may be implemented in many different ways. The invention and its embodiments are thus not restricted to the above-described examples but may vary within the scope of the claims.

## Claims

1. A sowing machine (1) which comprises at least
a seed container (2) for storing the seeds to be sowed, and
a sowing unit (3) for directing the seeds to the ground, such a sowing unit comprising at least
a longitudinal seed box (4) of a substantially enclosed structure for guiding the seeds by means of a feed apparatus (5) connected thereto through seed tubes to a seed coulter (6),
press wheels (7) to finalize the sowing, and
a pulling device (8) for coupling the sowing machine to a work machine,
**characterised in that**
the seed box (4) comprises two parallel seed compartments in the direction of its longitudinal axis, a sowing compartment (9) and a return compartment (10), so that
the sowing compartment and return compartment are connected to each other by means of transfer openings (13) at the opposite ends of the pair of elongated compartments, whereby
there are in the sowing compartment and return compartment, transfer means (14) in their longitudinal direction establishing a mechanical movement, so that
the first transfer means are adapted to guide the seeds to the feed apparatus (5) in connection with the sowing compartment (9) and the second transfer means having an opposite direction of movement are arranged to return the seeds that have bypassed the feed apparatus to the beginning of the sowing compartment through the return compartment (10), to establish a continuous circulation in the seed box (4).

2. A sowing machine (1) as claimed in claim 1, **characterised in that**
the sowing machine (1) further comprises a fertilizer container (15) for storing fertilizer released in connection with the seeds being sowed.
the sowing unit (3) further comprises
a fertilizer box (16) essentially parallel to the seed box (4) for guiding fertilizer granules by means of the feed apparatus connected thereto to a fertilizer coulter, and
in the fertilizer box (16), two parallel compartments in the direction of its longitudinal axis have been formed, a fertilizer compartment (17) and a transfer compartment (18), so that
the fertilizer compartment and transfer compartment are connected to each other by means of transfer openings (19) at the opposite ends of the pair of elongated compartments, and
in the fertilizer compartment and transfer compartment there are transfer means (20) in their longitudinal direction so that the first transfer means are adapted to guide the fertilizer granules in the fertilizer compartment to the feed apparatus, and the second transfer means are arranged to return the fertilizer granules that bypassed the feed apparatus and flowing to the transfer compartment through the flow opening, to the beginning of the fertilizer compartment.

3. A sowing machine (1) as claimed in claim 2, **characterised in that** the seed box (4) and the fertilizer box (16) are adapted to be interconnected.

4. A sowing machine (1) as claimed in claim 2, **characterised in that** the seed box (4) and the fertilizer box (16) are adapted to be separate from each other.

5. A sowing machine (1) as claimed in claim 4, **characterised in that** there are press wheels (7) between the seed box (4) and the fertilizer box (16).

6. A sowing machine (1) as claimed in any one of the preceding claims, **characterised in that** the transfer means (14, 20) comprise a screw conveyor.

7. A sowing machine (1) as claimed in any one of the preceding claims, **characterised in that** the seeds are directed to the seed box (4) through a filling tray (12) adapted to its lid (11).

8. A sowing machine (1) as claimed in claim 7, **characterised in that** the seeds are directed to the filling tray (12) of the seed box (4) by letting them flow by way of gravity from the seed container (2).

9. A sowing machine (1) as claimed in claim 7, **characterised in that** the seeds are directed to the filling tray (12) of the seed box (4) from the seed container (2) by a threaded screw.

10. A sowing machine (1) as claimed in any one of claims 2-9 **characterised in that** the fertilizer granules are directed to the fertilizer box (16) through a tray (22) adapted to its lid (21).

11. A sowing machine (1) as claimed in claim 10, **characterised in that** the fertilizer granules are directed to the tray (22) of the fertilizer box (16) by letting them flow by way of gravity from the fertilizer container (15).

12. A sowing machine (1) as claimed in any one of the preceding claims, **characterised in that** the sowing machine (1) further comprises
at least two sowing units (3) adapted to be rotatable in the direction of movement of the sowing machine (1) so that
the sowing unit is rotatable in relation to an articulated shaft (24) at its end to a vertical position in a plane that is substantially transverse in relation to said direction of movement.

13. A sowing machine (1) as claimed in claim 12, **characterised in that**
there are two sowing units (3) in the sowing machine (1), whereby they in their use position are positioned on substantially the same longitudinal axis while in their transport position they are in a substantially parallel position.

14. A method for carrying out sowing by a sowing machine (1) according to one of claims 1-13, whereby fertilizer, seeds, or other granular substance is loaded to one or more container sections (2, 15) of the sowing machine;
material is transferred by a first screw conveyor (27) from a front container (2) to a distribution container (26);
when sowing is begun, the bottom valves in the distribution container and rear container (15) are opened, after which the material in these containers is guided by way of gravity through tubes (31, 32) to the longitudinal and substantially enclosed seed box (4) and/or the fertilizer box (16);
in the seed and/or fertilizer box (4, 16) the material is circulated circumferentially along parallel channels (9, 10 and 17, 18), guided by the transfer means (14, 20);
in its circulating movement in the seed and/or fertilizer boxes, the material is adapted to meet one or more feed apparatuses (5, 5') connected thereto, by means of the seed tube (5a, 5'a) of which the material is finally guided to the coulter (6) for sowing.

15. A method as claimed in claim 14 for carrying out sowing, in which
by keeping the bottom valve in the distribution container (26) closed, the material originating from the front container (2) is returned back to said front container, guided by a second conveyor screw (29) whereby
the material in the front container may be premixed to homogenize the material.

## Patentansprüche

1. Sämaschine (1), die mindestens Folgendes umfasst
einen Saatgutbehälter (2) zum Lagern des auszusäenden Saatguts, und
eine Säeinheit (3) zum Leiten des Saatguts zum Boden, wobei eine derartige Säeinheit mindestens Folgendes umfasst
einen länglichen Saatgutkasten (4) einer im Wesentlichen umschlossenen Struktur zum Führen des Saatguts mittels einer Zuführeinrichtung (5), die damit verbunden ist, durch Saatgutrohre zu einem Säschar (6),
Pressräder (7) zum Abschließen des Säens, und
eine Zugvorrichtung (8) zum Koppeln der Sämaschine an eine Arbeitsmaschine,
**dadurch gekennzeichnet, dass**
der Saatgutkasten (4) zwei parallele Saatgutkammern in Richtung seiner Längsachse umfasst, eine Säkammer (9) und eine Rückführkammer (10), derart, dass
die Säkammer und die Rückführkammer an den gegenüberliegenden Enden des Paares länglicher Kammern mittels Transferöffnungen (13) miteinander verbunden sind, wodurch
sich in der Säkammer und der Rückführkammer in deren Längsrichtung Transfermittel (14) befinden, die eine mechanische Bewegung bewirken, derart, dass
die ersten Transfermittel angepasst sind, das Saatgut in Verbindung mit der Säkammer (9) zur Zuführeinrichtung (5) zu führen, und die zweiten Transfermittel, die eine entgegengesetzte Bewegungsrichtung aufweisen, angeordnet sind, das Saatgut, das die Zuführeinrichtung umgangen hat, durch die Rückführkammer (10) zum Anfang der Säkammer zurückzuführen, um eine kontinuierliche Zirkulation im Saatgutkasten (4) zu bewirken.

2. Sämaschine (1) nach Anspruch 1, **dadurch gekennzeichnet, dass**
die Sämaschine (1) ferner einen Düngerbehälter (15) zum Lagern von Dünger, der in Verbindung mit dem auszusäenden Saatgut ausgegeben wird, umfasst.
die Säeinheit (3) ferner Folgendes umfasst
einen Düngerkasten (16), der im Wesentlichen parallel zum Saatgutkasten (4) liegt, zum Führen von Düngergranulat mittels der Zuführeinrichtung, die damit verbunden ist, zu einem Düngerschar, und
im Düngerkasten (16) zwei parallele Kammern in der Richtung seiner Längsachse gebildet sind, eine Düngerkammer (17) und eine Transferkammer (18), derart, dass
die Düngerkammer und die Transferkammer an den gegenüberliegenden Enden des Paares länglicher Kammern mittels Transferöffnungen (19) miteinander verbunden sind, und
sich in der Düngerkammer und der Transferkammer in deren Längsrichtung Transfermittel (20) befinden, derart, dass die ersten Transfermittel angepasst sind, das Düngergranulat in der Düngerkammer zur Zuführeinrichtung zu führen, und die zweiten Transfermittel angeordnet sind, das Düngergranulat, das die Zuführeinrichtung umgangen hat und durch die Fließöffnung zur Transferkammer fließt, zum Anfang der Düngerkammer zurückzuführen.

3. Sämaschine (1) nach Anspruch 2, **dadurch gekennzeichnet, dass** der Saatgutkasten (4) und der Düngerkasten (16) angepasst sind, miteinander verbunden zu sein.

4. Sämaschine (1) nach Anspruch 2, **dadurch gekennzeichnet, dass** der Saatgutkasten (4) und der Düngerkasten (16) angepasst sind, voneinander getrennt zu sein.

5. Sämaschine (1) nach Anspruch 4, **dadurch gekennzeichnet, dass** sich zwischen dem Saatgutkasten (4) und dem Düngerkasten (16) Pressräder (7) befinden.

6. Sämaschine (1) nach einem der vorhergehenden Ansprüche, **dadurch gekennzeichnet, dass** die Transfermittel (14, 20) einen Schneckenförderer umfassen.

7. Sämaschine (1) nach einem der vorhergehenden Ansprüche, **dadurch gekennzeichnet, dass** das Saatgut zum Saatgutkasten (4) durch eine Füllwanne (12), die an seinen Deckel (11) angepasst ist, geleitet wird.

8. Sämaschine (1) nach Anspruch 7, **dadurch gekennzeichnet, dass** das Saatgut zur Füllwanne (12) des Saatgutkastens (4) geleitet wird, indem es durch Schwerkraft aus dem Saatgutbehälter (2) fließt.

9. Sämaschine (1) nach Anspruch 7, **dadurch gekennzeichnet, dass** das Saatgut aus dem Saatgutbehälter (2) durch eine Gewindeschnecke zur Füllwanne (12) des Saatgutkastens (4) geleitet wird.

10. Sämaschine (1) nach einem der Ansprüche 2 bis 9, **dadurch gekennzeichnet, dass** das Düngergranulat zum Düngerkasten (16) über eine Wanne (22), die an seinen Deckel (21) angepasst ist, geleitet wird.

11. Sämaschine (1) nach Anspruch 10, **dadurch gekennzeichnet, dass** das Düngergranulat zur Wanne (22) des Düngerkastens (16) geleitet wird, indem es durch Schwerkraft aus dem Düngerbehälter (15) fließt.

12. Sämaschine (1) nach einem der vorhergehenden Ansprüche, **dadurch gekennzeichnet, dass** die Sämaschine (1) ferner Folgendes umfasst
mindestens zwei Säeinheiten (3), die angepasst sind, in die Bewegungsrichtung der Sämaschine (1) drehbar zu sein, derart, dass
die Säeinheit mit Bezug auf eine Gelenkwelle (24) an ihrem Ende in einer Ebene, die im Wesentlichen quer zur Bewegungsrichtung verläuft, in eine vertikale Position drehbar ist.

13. Sämaschine (1) nach Anspruch 12, **dadurch gekennzeichnet, dass**
sich zwei Säeinheiten (3) in der Sämaschine (1) befinden, wodurch sie in ihrer Einsatzposition im Wesentlichen auf derselben Längsachse positioniert sind, während sie sich in ihrer Transportposition in einer im Wesentlichen parallelen Position befinden.

14. Verfahren zum Durchführen des Säens durch eine Sämaschine (1) nach einem der Ansprüche 1 bis 13, wodurch
Dünger, Saatgut oder eine andere Granulatsubstanz in einen oder mehrere Behälterbereiche (2, 15) der Sämaschine geladen wird;
Material durch einen ersten Schneckenförderer (27) von einem vorderen Behälter (2) zu einem Verteilungsbehälter (26) transferiert wird;
wenn mit dem Säen begonnen wird, die Bodenventile im Verteilungsbehälter und im hinteren Behälter (15) geöffnet werden, wonach das Material in diesen Behältern mittels Schwerkraft durch Rohre (31, 32) zum länglichen und im Wesentlichen umschlossenen Saatgutkasten (4) und/oder zum Düngerkasten (16) geführt wird;
das Material im Saatgut- und/oder im Düngerkasten (4, 16), geführt durch die Transfermittel (14, 20), entlang parallelen Kanälen (9, 10 und 17, 18) umfänglich zirkuliert wird;
das Material in seiner zirkulierenden Bewegung im Saatgut- und/oder im Düngerkasten angepasst ist, mittels des Saatgutrohres (5a, 5'a), von dem das Material zum Säen schließlich zum Schar (6) geführt wird, auf eine oder mehrere Zuführeinrichtungen (5, 5'), die damit verbunden sind, zu treffen.

15. Verfahren nach Anspruch 14 zum Durchführen des Säens, bei dem
durch Geschlossenhalten des Bodenventils im Verteilungsbehälter (26) das aus dem vorderen Behälter (2) kommende Material, geführt von einer zweiten Fördererschnecke (29), zum vorderen Behälter zurückgeführt wird, wodurch
das Material im vorderen Behälter vorgemischt werden kann, um das Material zu homogenisieren.

## Revendications

1. Semoir (1) qui comprend au moins :
un récipient de graines (2) pour stocker les graines à semer, et
une unité d'ensemencement (3) pour diriger les graines vers le sol, une telle unité d'ensemencement comprenant au moins :
une boîte de graines longitudinale (4) d'une structure sensiblement close pour guider les graines au moyen d'un appareil d'alimentation (5) raccordé à cette dernière par des tubes de graines à un coutre de graines (6),
des roues de pression (7) pour finaliser l'ensemencement, et
un dispositif de traction (8) pour coupler le semoir à une machine de travail,
**caractérisé en ce que** :
la boîte de graines (4) comprend deux compartiments de graines parallèles dans la direction de son axe longitudinal, un compartiment d'ensemencement (9) et un compartiment de retour (10), de sorte que :
le compartiment d'ensemencement et le compartiment de retour sont raccordés entre eux au moyen d'ouvertures de transfert (13) au niveau des extrémités opposées de la paire de compartiments allongés, moyennant quoi :
dans le compartiment d'ensemencement et le compartiment de retour, il y a des moyens de transfert (14) dans leur direction longitudinale établissant un mouvement mécanique, de sorte que :
les premiers moyens de transfert sont adaptés pour guider les graines vers l'appareil d'alimentation (5) raccordé à l'appareil d'ensemencement (9) et les seconds moyens de transfert ayant une direction opposée de mouvement sont agencés pour ramener les graines qui ont contourné l'appareil d'alimentation jusqu'au début du compartiment d'ensemencement par le compartiment de retour (10), afin d'établir une circulation continue dans la boîte de graines (4).

2. Semoir (1) selon la revendication 1, **caractérisé en ce que** :
le semoir (1) comprend en outre un récipient d'engrais (15) pour stocker l'engrais libéré conjointement avec les graines qui sont semées,
l'unité l'ensemencement (3) comprend en outre :
une boîte d'engrais (16) essentiellement parallèle à la boîte de graines (4) pour guider les granulés d'engrais au moyen de l'appareil d'alimentation raccordé à cette dernière, à un coutre d'engrais, et
dans la boîte d'engrais (16), deux compartiments parallèles dans la direction de son axe longitudinal, ont été formés, un compartiment d'engrais (17) et un compartiment de transfert (18), de sorte que :
le compartiment d'engrais et le compartiment de transfert sont raccordés entre eux au moyen d'ouvertures de transfert (19) au niveau des extrémités opposées de la paire de compartiments allongés, et
dans le compartiment d'engrais et le compartiment de transfert, il y a des moyens de transfert (20) dans leur direction longitudinale de sorte que les premiers moyens de transfert sont adaptés pour guider les granulés d'engrais dans le compartiment d'engrais jusqu'à l'appareil d'alimentation, et les seconds moyens de transfert sont agencés pour ramener les granulés d'engrais qui ont contourné l'appareil d'alimentation et s'écoulant vers le compartiment de transfert en passant par l'ouverture d'écoulement, jusqu'au début du compartiment d'engrais.

3. Semoir (1) selon la revendication 2, **caractérisé en ce que** la boîte de graines (4) et la boîte d'engrais (16) sont adaptées pour être interconnectées.

4. Semoir (1) selon la revendication 2, **caractérisé en ce que** la boîte de graines (4) et la boîte d'engrais (16) sont adaptées pour être séparées l'une de l'autre.

5. Semoir (1) selon la revendication 4, **caractérisé en ce qu'**il y a des roues de pression (7) entre la boîte de graines (4) et la boîte d'engrais (16).

6. Semoir (1) selon l'une quelconque des revendications précédentes, **caractérisé en ce que** les moyens de transfert (14, 20) comprennent un transporteur à vis.

7. Semoir (1) selon l'une quelconque des revendications précédentes, **caractérisé en ce que** les graines sont dirigées vers la boîte de graines (4) par un plateau de remplissage (12) adapté sur son couvercle (11).

8. Semoir (1) selon la revendication 7, **caractérisé en ce que** les graines sont dirigées vers le plateau de remplissage (12) de la boîte de graines (4) en les laissant s'écouler au moyen de la gravité à partir du récipient de graines (2).

9. Semoir (1) selon la revendication 7, **caractérisé en ce que** les graines sont dirigées vers le plateau de remplissage (12) de la boîte de graines (4) à partir du récipient de graines (2) par une vis filetée.

10. Semoir (1) selon l'une quelconque des revendications 2 à 9, **caractérisé en ce que** les granulés d'engrais sont dirigés vers la boîte d'engrais (16) par le biais d'un plateau (22) adapté sur son couvercle (21).

11. Semoir (1) selon la revendication 10, **caractérisé en ce que** les granulés d'engrais sont dirigés vers le plateau (22) de la boîte d'engrais (16) en les laissant s'écouler au moyen de la gravité du récipient d'engrais (15).

12. Semoir (1) selon l'une quelconque des revendications précédentes, **caractérisé en ce que** le semoir (1) comprend en outre :
au moins deux unités d'ensemencement (3) adaptées pour pouvoir tourner dans la direction du déplacement du semoir (1), de sorte que :
le semoir peut tourner par rapport à un arbre articulé (24), au niveau de son extrémité, par rapport à une position verticale dans un plan qui est sensiblement transversal par rapport à ladite direction de déplacement.

13. Semoir (1) selon la revendication 12, **caractérisé en ce que** :
il y a deux unités d'ensemencement (3) dans le semoir (1), moyennant quoi, dans leur position d'utilisation, elles sont positionnées sensiblement sur le même axe longitudinal, alors que dans leur position de transport, elles sont dans une position sensiblement parallèle.

14. Procédé pour réaliser l'ensemencement par un semoir (1) selon l'une des revendications 1 à 13, moyennant quoi l'engrais, les graines ou une autre substance granulaire sont chargés sur une ou plusieurs sections de récipient (2, 15) du semoir ;
le matériau est transféré par un premier transporteur à vis (27) d'un récipient avant (2) à un récipient de distribution (26) ;
lorsque l'ensemencement commence, des valves inférieures dans le récipient de distribution et le récipient arrière (15) sont ouvertes, après quoi le matériau dans ces récipients est guidé au moyen de la gravité par des tubes (31, 32) jusqu'à la boîte de graines (4) longitudinale et sensiblement close et/ou la boîte d'engrais (16) ;
dans la boîte de graine et/ou d'engrais (4, 16), le matériau circule de manière circonférentielle le long de canaux parallèles (9, 10 et 17, 18), guidé par les moyens de transfert (14, 20) ;
dans son déplacement circulaire dans les boîtes de graines et/ou d'engrais, le matériau est adapté pour rencontrer un ou plusieurs appareils d'alimentation (5, 5') raccordés à ces dernières, au moyen du tube d'alimentation (5a, 5'a), desquels le matériau est finalement guidé vers le coutre (6) pour l'ensemencement.

15. Procédé selon la revendication 14, pour réaliser l'ensemencement, dans lequel :
en maintenant la valve inférieure dans le récipient de distribution (26), fermée, le matériau provenant du récipient avant (2) est ramené vers ledit récipient avant, guidé par une seconde vis de transporteur (29), moyennant quoi :
le matériau dans le récipient avant peut être pré-mélangé afin d'homogénéiser le matériau.
